# EUROPEAN PATENT APPLICATION

(11) **EP 1 975 798 A1**
(43) Date of publication of application: **01.10.2008**
(21) Application number: 08103002.5
(22) Date of filing: 27.03.2008
(51) Int. Cl.: G06F 11/14, H03M 7/30

(54) **System and method for exporting data directly from deduplication storage to non-deduplication storage**

(30) Priority: 30.03.2007 US 731178
(71) Applicant: SYMANTEC CORPORATION, Cupertino, California 95014 (US)
(72) Inventor: Arbour, Frederick M., Fridley, MN 55432 (US); Reker, Matthew M., Blaine, MN 55449 (US)
(74) Representative: Meldrum, David James

(57) **Abstract**

A method, system, and computer-readable storage medium are disclosed for exporting data from a deduplication data store to a non-deduplication data store. A set of data may be stored in the deduplication data store in a format eliminating one or more duplicates of data objects in the set of data. The set of data in the deduplication data store may be stored separately from metadata describing the set of data. The set of data stored in the deduplication data store may be read. The set of data read from the deduplication data store and the metadata may be stored in a non-deduplication data store. In the non-deduplication data store, the set of data is stored in a format preserving the one or more duplicates of data objects in the set of data.

## Description

### BACKGROUND OF THE INVENTION

### Field of the Invention

This invention is related to the field of computer systems and, more particularly, to the exporting of data from deduplication data stores.

### Description of the Related Art

Deduplication backup solutions are designed to reduce the size of backups, thereby making more efficient use of network resources. A typical networked environment may store many copies of the same data object (e.g., a file or directory). In the deduplication process, duplicate or redundant data is eliminated. Only one copy of every element of data is stored, but an index of the discarded data is retained. By maintaining only "unique" data, deduplication backup solutions may significantly reduce the storage capacity needed for backups. Deduplication may also be referred to as data reduction or commonality factoring. An example of a deduplication backup solution is PureDisk^{™} from Symantec Corporation.

In a typical example of deduplication, numerous exact copies of the same file in a networked environment may be maintained in a deduplication backup solution as one copy of the file plus numerous references that point to the single copy of the file. By saving subsequent iterations of the file as references, storage capacity needs may be reduced while maintaining the integrity and substantial completeness of the original data store. Deduplication may also provide for the compaction of data at various levels of granularity by removing not only redundant data objects but also redundant portions of data objects. Deduplication backup solutions may use a variety of techniques to classify data as unique or redundant. In some solutions, hashing algorithms may be used to identify unique data. In other solutions, pattern-matching algorithms may be used.

Deduplication backup solutions may be deployed with a variety of storage technologies such as, for example, disk-based backup appliances or virtual tape library (VTL) solutions that emulate the operations of a tape library. Typically, a catalog of data is built as the data is copied to the deduplication data store. The catalog may index data objects and/or portions of data objects by assigning a reference to each object and/or element. The catalog may be used to recover the duplicate objects and/or elements if needed. On subsequent backups, the catalog may be used to identify which data objects and/or elements are unique and should therefore be saved in full to the deduplication data store.

It is desirable to provide methods and systems for the integration of deduplication backup solutions with other types of backup solutions.

### SUMMARY

A variety of methods, systems, and computer-readable storage media are disclosed for exporting data from a deduplication data store to a non-deduplication data store. In a deduplication data store, a set of data may be stored in a compact format wherein duplicates of data objects and/or data elements within the data objects are eliminated. Metadata for the set of data may include an index of references to data objects and/or elements to permit the recovery of eliminated duplicates by following pointers to the "unique" objects and/or elements maintained in the deduplication data store. The metadata may be stored in a metadata repository that is separate from the set of data in the deduplication data store.

According to one embodiment, the set of data may be read directly from the deduplication data store. Using the index of references in the metadata, the set of data may be assembled in an expanded format, including duplicates of data objects and/or elements. The set of data may be combined with at least a portion of the metadata and sent to a non-deduplication data store. The set of data and the metadata may be stored in the non-deduplication data store. In the non-deduplication data store, the set of data is stored in a format preserving the one or more duplicates of data objects in the set of data. The set of data and the metadata may be stored together in the non-deduplication data store.

According to one embodiment, the export process may be triggered by user-specified events or by a "run once" command. The export process may act upon a subset of the set of data in accordance with a user-specified filter or other selection. The set of data backed up to the deduplication data store from an original data store may exported to the non-deduplication data store and then restored to the original data store in its original format.

### BRIEF DESCRIPTION OF THE DRAWINGS

A better understanding of the present invention can be obtained when the following detailed description is considered in conjunction with the following drawings, in which:

FIG. 1 illustrates a networked backup environment for exporting data from a deduplication data store to a non-deduplication data store according to one embodiment.

FIG. 2 is a flow diagram illustrating a method for exporting data from a deduplication data store to a non-deduplication data store according to one embodiment.

FIG. 3 illustrates a networked backup environment for backing up data to a deduplication data store and exporting data from the deduplication data store to a non-deduplication data store according to one embodiment.

FIG. 4 is a flow diagram illustrating a method for backing up data to a deduplication data store and exporting data from the deduplication data store to a non-deduplication data store according to one embodiment.

FIG. 5 illustrates a networked backup environment including a user interface for configuring the exporting of data from a deduplication data store to a non-deduplication data store according to one embodiment.

FIG. 6 illustrates a typical computer system configured to implement embodiments of the systems and methods described above.

While the invention is described herein by way of example for several embodiments and illustrative drawings, those skilled in the art will recognize that the invention is not limited to the embodiments or drawings described. It should be understood that the drawings and detailed description thereto are not intended to limit the invention to the particular form disclosed, but on the contrary, the intention is to cover all modifications, equivalents and alternatives falling within the spirit and scope of the invention as defined by the appended claims.

### DETAILED DESCRIPTION OF EMBODIMENTS

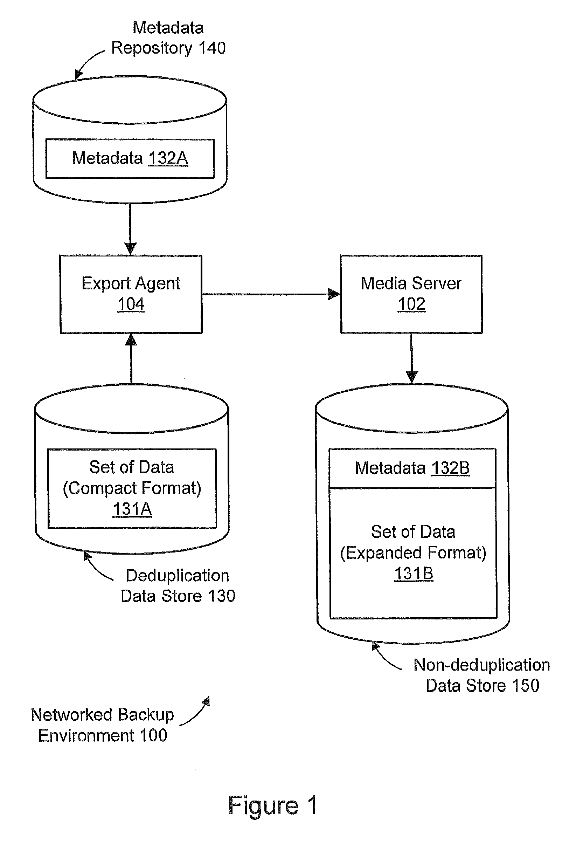

Using embodiments of the systems and methods described herein, data in a deduplication data store may be exported directly to a non-deduplication data store. In the non-deduplication data store, the data may be stored with its metadata to permit an efficient and accurate restore. The data may be exported from the deduplication data store in an event-driven and/or selective manner. FIGs. 1, 3, 5, and 6 illustrate examples of computer systems and networked environments that may be used with the systems and methods described herein for exporting data from a deduplication data store to a non-deduplication data store. The example configurations shown in FIGs. 1, 3, 5, and 6, and the quantity and kind of elements shown therein, are intended to be illustrative rather than limiting, and other embodiments are possible and contemplated.

FIG. 1 illustrates a networked backup environment 100 for exporting data from a deduplication data store 130 to a non-deduplication data store 150 according to one embodiment. The networked backup environment 100 may utilize any of various suitable backup solutions including, for example, a deduplication backup solution and a non-deduplication backup solution. A deduplication backup solution (e.g., versions of PureDisk^{™} from Symantec Corporation) may provide and manage a deduplication data store 130. In the deduplication data store 130, a set of data 131A may be stored in a compact format wherein duplicates of data objects and/or data elements within the data objects are eliminated. Metadata 132A for the set of data 131A may include an index of references to data objects and/or elements to permit the recovery of eliminated duplicates by following pointers to the "unique" objects and/or elements maintained in the deduplication data store 130. The metadata 132A may be stored in a metadata repository 140 that is separate from the set of data 131A in the deduplication data store 130. The set of data 131A may comprise a plurality of data objects (e.g., files, directories, etc.). The metadata 132A may describe various attributes of the data objects such as the ownership affiliations, permissions and security parameters, creation and modification dates, hierarchical relationships, and other suitable attributes of the data objects.

A non-deduplication backup solution (e.g., versions of NetBackup^{™} from Symantec Corporation) may provide and manage a non-deduplication data store 150. The non-deduplication data store 150 may be implemented with conventional storage and backup techniques in which duplicates of data objects and/or data elements are preserved. In one embodiment, data in the non-deduplication data store 150 may be stored in an archived format. In one embodiment, a computer system referred to as a media server 102 may manage the non-deduplication data store 150. In the networked backup environment 100, the primary role of the media server 102 may be to move data to backup storage such as the non-deduplication data store 150. The media server 102 may be coupled to storage devices such as the non-deduplication data store 150 directly or over a network.

The deduplication data store 130 may be implemented using any suitable storage technologies such as, for example, disk-based backup appliances or virtual tape library (VTL) solutions that emulate the operations of a tape library. The metadata repository 140 may be implemented using suitable storage technologies such as, for example, disk-based storage. The non-deduplication data store 150 may be implemented using suitable technologies for storage backup such as, for example, tape libraries, disk arrays, network appliances, etc.

In one embodiment, various of the components shown in FIG. 1 may be coupled through a storage area network (SAN). A SAN is typically a high-speed network that allows the establishment of direct connections between storage devices (e.g., the deduplication data store 130 and the non-deduplication data store 150) and computer systems (e.g., the media server 102). To enable such connections, the SAN may include various elements in a SAN fabric such as one or more switches, routers, hubs, etc. Various of the elements in the SAN fabric may include network and storage interfaces, memories, and processors operable to execute program instructions. In one embodiment, the media server 102 and/or elements in the SAN fabric may include a volume manager that enables the management of physical storage resources as logical entities such as volumes.

As will be discussed in greater detail below, the set of data 131A stored in compact form in the deduplication data store 130 may be exported to the non-deduplication data store 150. In the non-deduplication data store 150, the data 131 B may be stored in an expanded format wherein duplicates of data objects and/or data elements are included. The data 1318 may also be stored with its associated metadata 132B in the non-deduplication data store 150. In one embodiment, an export agent 104 may implement aspects of the export process such as reading the data 131A from the deduplication data store 130. The export agent 104 may comprise software executable on a computer system coupled to the deduplication data store 130 and the metadata repository 140. In one embodiment, the export agent 104 may be resident on a computer system that acts as a server (e.g., a PureDisk^{™} server) for the deduplication data store 130. In one embodiment, a client for the non-deduplication backup solution (e.g., NetBackup^{™}) may also be installed on the same computer system as the export agent 104. The export agent may be configured to communicate with the client for the non-deduplication backup solution through a plurality of functions in an application programming interface (API) for the non-deduplication backup solution.

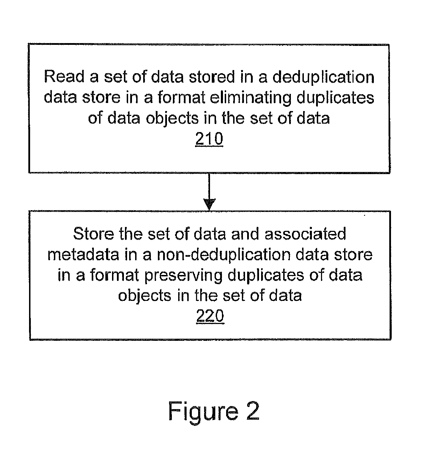

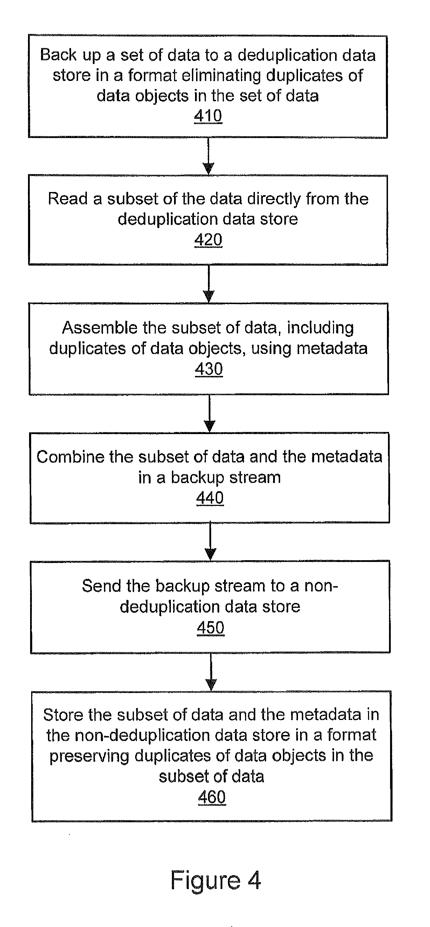

FIG. 2 is a flow diagram illustrating a method for exporting data from a deduplication data store 130 to a non-deduplication data store 150 according to one embodiment. As indicated at 210, a set of data 131 A stored in a deduplication data store 130 may be read. The set of data may be stored in the deduplication data store in a format eliminating one or more duplicates of data objects in the set of data. The set of data in the deduplication data store may be stored separately from metadata 132A describing the set of data. As will be described in greater detail below (e.g., with reference to FIG. 4), the set of data may be exported to a non-deduplication data store. As indicated at 220, the set of data 131B and the metadata 132B may be stored in the non-deduplication data store 150. The set of data may be stored in the non-deduplication data store in a format preserving the one or more duplicates of data objects in the set of data.

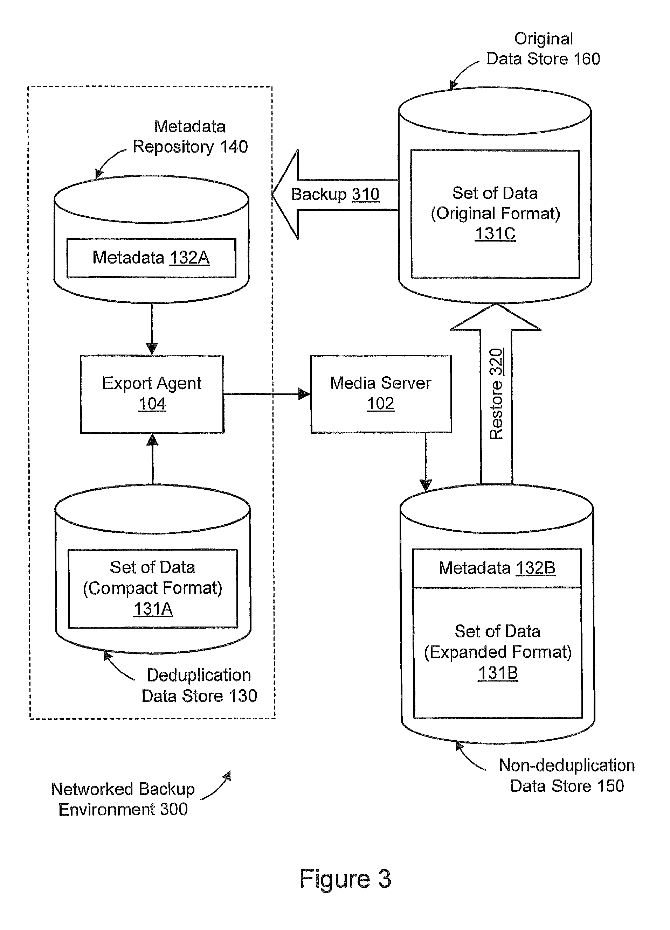

FIG. 3 illustrates a networked backup environment 300 for backing up data to a deduplication data store 130 and exporting data from the deduplication data store 130 to a non-deduplication data store 150 according to one embodiment. In one embodiment, the networked backup environment 300 may include any of the elements of the networked backup environment 100 shown in FIG. 1. In addition to the export process discussed herein, the networked backup environment 300 may include a backup process 310 and/or restore process 320. The backup process 310 and/or restore process 320 may utilize additional computer systems not shown in FIG. 3, such as storage hosts, intermediate computer systems in a network, etc.

Before the set of data 131A is exported from the deduplication data store 130 to the non-deduplication data store 150, the data may be backed up to the deduplication data store 130 from an original data store 160. The original data store 160 may comprise a storage device used for primary storage in a networked environment. In the backup process 310, a set of data 131C stored in an original format (e.g., a substantially uncompressed format in a conventional file system) may be backed up to the deduplication data store 130 using deduplication techniques to remove duplicates of data objects and/ or elements within the data objects. The metadata 132A may be generated during the backup process 310 by copying attributes of objects in the set of data 131C and by generating an index of references to objects and/or elements within the compacted set of data 131 A in the deduplication data store 130. The metadata 132A may further include an indication (i.e., an identification) of the original data store 160. As discussed above, the metadata 132A may be stored in a metadata repository 140 separate from the compacted set of data 131A in the deduplication data store 130. The backup process 310 may be performed using various techniques for triggering events and filtering data.

When the set of data 131A is exported to the non-deduplication data store 150, a catalog describing the expanded set of data 131 B in the non-deduplication data store may be generated. The catalog may be maintained in the non-deduplication data store (e.g., with the metadata 132B) and/or in another location. The catalog may comprise an indication of the original data store 160. In one embodiment, the set of data exported to the non-deduplication data store 150 may be restored from the non-deduplication data store to the original data store 160. The restore process 320 may be performed using conventional storage management technologies to copy the set of data from the non-deduplication data store, optionally convert the set of data from the expanded format (e.g., an archival format suitable for tape) to a conventional format required by the destination data store, and store the final set of data 131C in the destination data store. In one embodiment, the catalog may be used by the restore process 320 to identify the original data store 160 and restore the set of data 131C to the original data store 160. In one embodiment, the restored data 131C is essentially the same as the original data 131C (prior to the backup process 310), including having essentially the same metadata and the same format, even after undergoing deduplication and being exported from the deduplication data store 130.

FIG. 4 is a flow diagram illustrating a method for backing up data to a deduplication data store 130 and exporting data from the deduplication data store 130 to a non-deduplication data store 150 according to one embodiment. As indicated at 410, a set of data may be backed up to a deduplication data store 130. As discussed above, the backup process 310 may include a deduplication process that generates and stores a set of data 131A in a format eliminating one or more duplicates of data objects and/or elements within data objects.

As indicated at 420, at least a subset of the data may be read directly from the deduplication data store 130. A deduplication data store manager may comprise a component configured to create, store (e.g., in the backup process 310), and otherwise manage the deduplicated data in the deduplication data store 130. The deduplication data store 130 may package the deduplicated data in one or more storage containers. In one embodiment, reading data directly from the deduplication data store 130 comprises bypassing the deduplication data store manager to read the data from the one or more storage containers in the deduplication data store. In one embodiment, the export agent 104 may perform aspects of reading the data directly from the deduplication data store 130.

As indicated at 430, the subset of data may be assembled in an expanded format, including duplicates of data objects and/or elements, using the metadata 132A for the data obtained from the metadata repository 140. Multiple pointers in the metadata 132A representing multiple instances of the same object or element may point to a single instance of the object or element in the compacted set of data 131A. The pointers in the metadata may be a result of the backup process 310 generating an index of objects. The plurality of data objects in the subset of data may be reconstructed or assembled by using the pointers to locations of the data objects in the deduplication data store 130. In one embodiment, the export agent 104 and/or a client for the non-deduplication backup solution (e.g., NetBackup^{™}) may perform aspects of assembling the subset of the data.

As indicated at 440, the subset of data may be combined with at least a portion of the metadata (e.g., the various attributes of data objects discussed above) by placing both the metadata and the subset of data in a backup stream. In one embodiment, the data and metadata may be combined in the backup stream such that the data objects are not entirely contiguous. In one embodiment, the backup stream may comprise a "flat" format (e.g., tar) suitable for archiving to tape. In one embodiment, the export agent 104, the client for the non-deduplication backup solution (e.g., NetBackup^{™}), and/or the media server 102 may perform aspects of creating the backup stream. Components such as the export agent 104 and media server 102 may store a temporary copy of the data and metadata in memory before transferring the data and metadata to the non-deduplication data store 150.

As indicated at 450, the backup stream may be sent to the non-deduplication data store 150. As indicated at 460, the subset of data may be stored with the metadata in the non-deduplication data store 150 in the expanded format described above. In one embodiment, some elements of data and metadata in the backup stream may be stored (as indicated at 460) before other elements of data and metadata in the backup stream have been sent (as indicated at 450). Therefore, method elements 450 and 460 may be performed repeatedly or substantially simultaneously in one embodiment. A catalog describing the data, including an indication of the original data store 160, may also be generated and stored. In one embodiment, data may be deleted from the deduplication data store 130 after storing the corresponding data in the non-deduplication data store 150.

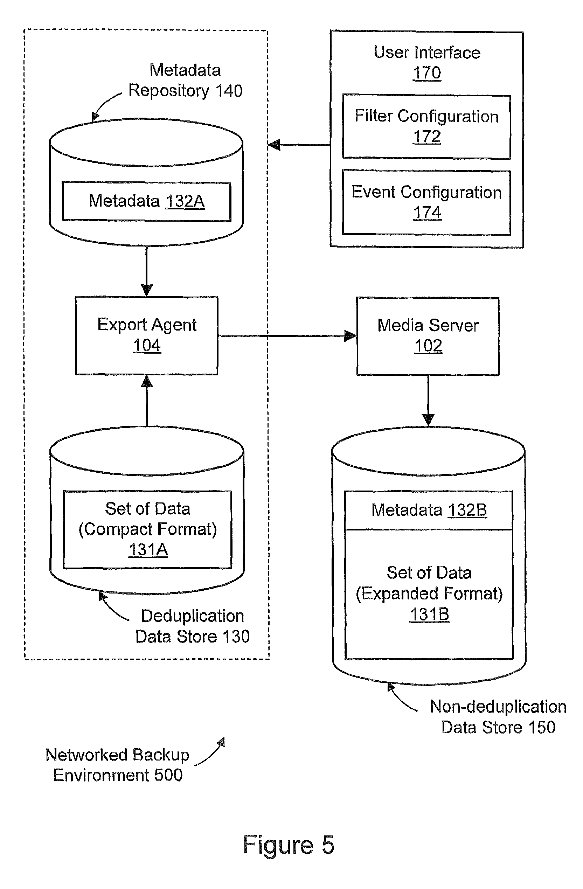

FIG. 5 illustrates a networked backup environment 500 including a user interface 170 for configuring the exporting of data from a deduplication data store 130 to a non-deduplication data store 150 according to one embodiment. In one embodiment, the networked backup environment 500 may include any of the elements of the networked backup environment 100 shown in FIG. 1 and/or the networked backup environment 300 shown in FIG. 3. The networked backup environment 500 may include a user interface 170 usable to configure aspects of the backup process 310, export process, and/or restore process 320. The user interface 170 may comprise various windows, lists, options, etc. in a graphical user interface (GUI) and/or various commands in a command-line interface (CLI). In one embodiment, the user interface 170 may be provided by a centralized component (e.g., a master server or administrative console) that is communicatively coupled to other elements of the networked backup environment 500. This centralized component may have access to storage for maintaining configuration parameters specified through the user interface 170.

In one embodiment, the user interface 170 may include a component for filter configuration 172. Using the filter configuration component 172, one or more filters may be specified. A filters may comprise a selection of one or more data objects in the deduplication data store 130. For example, filters may comprise client identifications, selections relative to the metadata 132A (e.g., all files and directories owned by a particular user), and/or selections of sub-hierarchies of the data objects (e.g., all files and directories within a particular directory). Filters may include ranges of values, wildcards, etc. The filters may be ranked by relative priority. In one embodiment, filters may include specific times or ranges of time (e.g., the time at which a backup was made) so that specific versions of data objects corresponding to the specified time(s) may be exported. In one embodiment, a filter may be specified by a user through a GUI. A subset of the set of data 131A to be exported from the deduplication data store 130 may be determined by applying the one or more filters to the entire set of data 131 A.

In one embodiment, the user interface 170 may include a component for event configuration 174. Using the event configuration component 174, one or more events for triggering operations in the networked backup environment 500 may be specified. For example, the process of exporting the set of data from the deduplication data store to the non-deduplication data store may be triggered by the occurrence of an event. The backup process 310 and/or restore process 320 may also be triggered by events. The events may be specified by user input, default values, or a combination thereof. Events may comprise scheduled occurrences, such as a routine backup or a daily export of data from the deduplication data store 130 to the non-deduplication data store 150. Events may also occur upon happenings such as particular thresholds or other values being met. For example, an export of data from the deduplication data store 130 to the non-deduplication data store 150 may be triggered for data set to expire in the deduplication data store 130 or if a free storage capacity of the deduplication data store 130 passes below a predetermined threshold.

In one embodiment, one or more filters may be combined with one or more events in a backup policy, export policy, or restore policy. Various of the processes in the networked backup environment 500 may also be performed immediately in response to user input (e.g., a "run once" instruction) entered through the user interface 170.

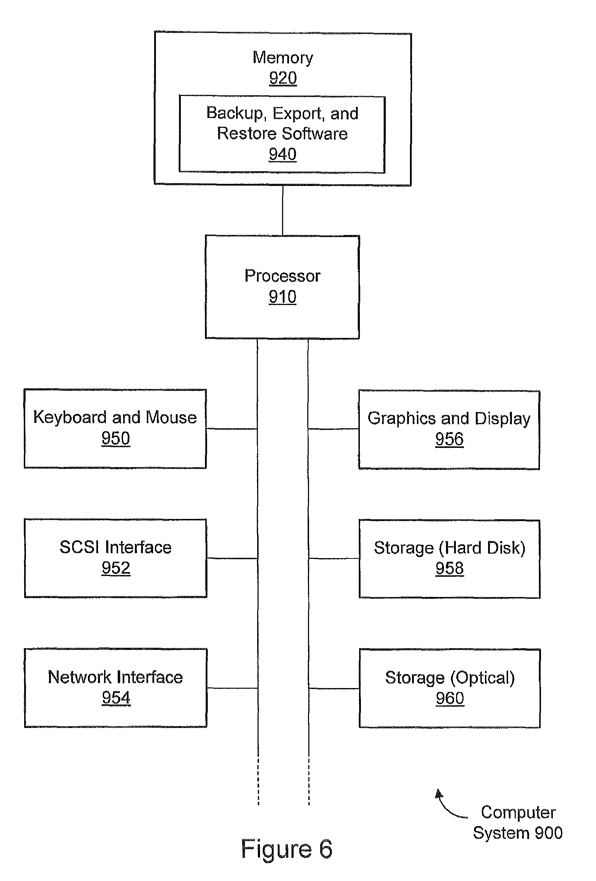

FIG. 6 illustrates a block diagram of a typical computer system 900 for implementing embodiments of the systems and methods described above. Computer system 900 may be illustrative of various computer systems in the networked backup environment 100 or 200, such as a media server 102A or 102B, a client 210, a master server 204, and/or various elements in a SAN fabric. Computer system 900 includes a processor 910 and a memory 920 coupled by a communications bus. Processor 910 can be a single processor or a number of individual processors working together. Memory 920 is typically random access memory (RAM), or some other dynamic storage device, and is capable of storing instructions to be executed by the processor, e.g., software 940 for exporting, backing up, and/or restoring data according to the systems and methods described herein. Memory 920 is also used for storing temporary variables or other intermediate information during the execution of instructions by the processor 910.

Computer system 900 may also include devices such as keyboard & mouse 950, SCSI interface 952, network interface 954, graphics & display 956, hard disk storage 958, and optical storage 960, all of which may be coupled to processor 910 by at least one communications bus. Computer system 900 can also include numerous elements not shown in the figure, such as additional storage devices, communications devices, input devices, and output devices, as illustrated by the ellipsis shown.

The techniques and methods discussed above may be implemented in software as one or more software programs, using a variety of computer languages, including, for example, traditional computer languages such as assembly language and C; object oriented languages such as C++ and Java; and scripting languages such as Perl and Tcl/Tk. Software 940 may comprise program instructions executable by processor 910 to perform any of the functions or methods described above.

Various embodiments may further include receiving, sending, or storing instructions and/or data implemented in accordance with the foregoing description upon a computer-accessible medium. Generally speaking, computer-accessible media may include storage media or memory media such as magnetic or optical media, e.g., disk or CD-ROM, volatile or non-volatile media such as RAM (e.g. SDRAM, DDR, RDRAM, SRAM, etc.), ROM, etc. In one embodiment, computer-accessible media may include transmission media or signals such as electrical, electromagnetic, or digital signals, conveyed via a communication medium such as a network and/or a wireless link.

The various methods as illustrated in the Figures and described herein represent exemplary embodiments of methods. The methods may be implemented in software, hardware, or a combination thereof. The order of the method elements may be changed, and various elements may be added, reordered, combined, omitted, modified, etc. Method elements may be performed automatically (i.e., without user intervention) and programmatically (i.e., according to program instructions executed by a computer).

Various modifications and changes may be made as would be obvious to a person skilled in the art having the benefit of this disclosure. It is intended that the invention embrace all such modifications and changes and, accordingly, that the above description and drawings be regarded in an illustrative rather than a restrictive sense.

## Claims

1. A method comprising:
reading a set of data stored in a deduplication data store, wherein the set of data is stored in the deduplication data store in a format eliminating one or more duplicates of data objects in the set of data, and wherein the set of data in the deduplication data store is stored separately from metadata describing the set of data; and
storing the set of data read from the deduplication data store and the metadata in a non-deduplication data store, wherein the set of data is stored in the non-deduplication data store in a format preserving the one or more duplicates of data objects in the set of data.

2. The method of claim 1,
wherein reading the set of data stored in the deduplication data store comprises assembling a plurality of data objects in the set of data using a plurality of pointers to a plurality of locations of the plurality of data objects in the deduplication data store.

3. The method of claim 1 or 2,
wherein reading the set of data stored in the deduplication data store comprises bypassing a deduplication data store manager to read the set of data from one or more storage containers in the deduplication data store.

4. The method of claim 1, 2 or 3,
wherein storing the set of data read from the deduplication data store with metadata in the non-deduplication data store comprises placing the set of data and the metadata in a backup stream, wherein the backup stream is sent to the non-deduplication data store.

5. The method of any preceding claim, further comprising:
specifying one or more events;
wherein reading the set of data from the deduplication data store and storing the set of data with the metadata in the non-deduplication data store are triggered by one of the events.

6. The method of any preceding claim, further comprising:
specifying one or more filters; and
determining the set of data to be read from the deduplication store by applying the one or more filters.

7. The method of any preceding claim, further comprising:
backing up the set of data from an original data store to the deduplication data store before reading the set of data from the deduplication data store.

8. The method of claim 7, further comprising:
restoring the set of data from the non-deduplication data store to the original data store.

9. The method of claim 7 or 8, further comprising:
storing a catalog describing the set of data stored in the non-deduplication data store, wherein the catalog comprises an indication of the original data store.

10. The method of any preceding claim, further comprising:
deleting the set of data from the deduplication data store after storing the set of data in the non-deduplication data store.

11. A computer-readable storage medium comprising program instructions, wherein the program instructions are computer-executable to implement:
reading a set of data stored in a deduplication data store, wherein the set of data is stored in the deduplication data store in a format eliminating one or more duplicates of data objects in the set of data, and wherein the set of data in the deduplication data store is stored separately from metadata describing the set of data; and
storing the set of data read from the deduplication data store and the metadata in a non-deduplication data store, wherein the set of data is stored in the non-deduplication data store in a format preserving the one or more duplicates of data objects in the set of data.

12. The computer-readable storage medium of claim 11,
wherein reading the set of data from the deduplication data store comprises assembling a plurality of data objects in the set of data using a plurality of pointers to a plurality of locations of the plurality of data objects in the deduplication data store.

13. The computer-readable storage medium of claim 11 or 12,
wherein reading the set of data from the deduplication data store comprises bypassing a deduplication data store manager to read the set of data from one or more storage containers in the deduplication data store.

14. The computer-readable storage medium of claim 11, 12 or 13,
wherein storing the set of data read from the deduplication data store with metadata in the non-deduplication data store comprises placing the set of data and the metadata in a backup stream, wherein the backup stream is sent to the non-deduplication data store.

15. A system comprising:
a deduplication data store, wherein the deduplication data store is configured to store a set of data in a format eliminating one or more duplicates of data objects in the set of data, and wherein the set of data in the deduplication data store is stored separately from metadata describing the set of data;
a non-deduplication data store; and
a computer system coupled to the deduplication data store and the non-deduplication data store, wherein the computer system comprises at least one processor and a memory, wherein the memory comprises program instructions executable by the at least one processor to:
read the set of data stored in the deduplication data store; and
send the set of data read from the deduplication data store and the metadata to the non-deduplication data store;
wherein the non-deduplication data store is configured to store the set of data and the metadata in a format preserving the one or more duplicates of data objects in the set of data.

16. The system of claim 15,
wherein, in reading the set of data from the deduplication data store, the program instructions are executable by the at least one processor to assemble a plurality of data objects in the set of data using a plurality of pointers to a plurality of locations of the plurality of data objects in the deduplication data store.

17. The system of claim 15 or 16,
wherein, in reading the set of data from the deduplication data store, the program instructions are executable by the at least one processor to bypass a deduplication data store manager to read the set of data from one or more storage containers in the deduplication data store.

18. The system of claim 15, 16 or 17,
wherein, in sending the set of data read from the deduplication data store and the metadata to the non-deduplication data store, the program instructions are executable by the at least one processor to place the set of data and the metadata in a backup stream.

19. The system of any of claims 15 to 18, further comprising:
an original data store;
wherein the set of data in the deduplication data store is backed up from the original data store;
wherein an indication of the original data store is stored with the set of data in the deduplication data store; and
wherein an indication of the original data store is stored with the set of data in the non-deduplication data store.

20. A system comprising:
means for reading a set of data stored in a deduplication data store, wherein the set of data is stored in the deduplication data store in a format eliminating one or more duplicates of data objects in the set of data, and wherein the set of data in the deduplication data store is stored separately from metadata describing the set of data; and
means for storing the set of data read from the deduplication data store and the metadata in a non-deduplication data store, wherein the set of data is stored in the non-deduplication data store in a format preserving the one or more duplicates of data objects in the set of data.
